# EUROPÄISCHE PATENTANMELDUNG

(11) **EP 0 539 862 A1**
(43) Veröffentlichungstag der Anmeldung: **05.05.1993**
(21) Anmeldenummer: 92118044.4
(22) Anmeldetag: 22.10.1992
(51) Int. Cl.: B29C 51/06, B29C 51/42

(54) **Verfahren und Vorrichtung zum taktweisen Thermoverformen von Kunststoffolie im Endlosband**

(30) Priorität: 31.10.1991 DE 4135935
(71) Anmelder: Klöckner Hänsel GmbH, D-30024 Hannover (DE)
(72) Erfinder: Kaplan, Horst-Egon, W-4811 Oerlinghausen (DE)
(74) Vertreter: Rehberg, Elmar, Dipl.-Ing.

(57) **Zusammenfassung**

Bei einem Verfahren zum taktweisen Thermoverformen von Kunststoffolie im Endlosband wird die Kunststoffolie (10) taktweise erwärmt und taktweise zwischen zwei Hälften eines Verformwerkzeugs unter Abstützung an der einen Hälfte mittels der anderen, Stempel (2) aufweisenden Hälfte positiv endverformt. Die Kunststoffolie wird nur im Stillstand ihrer taktweisen Bewegung unter beidseitigem Kontakt mit Heizplatten (16,20) ganzflächig erwärmt. Die erwärmte Kunststoffolie wird vor ihrer positiven Endverformung durch die Stempel bereichsweise zwischen den beiden Hälften des Verformwerkzeugs mechanisch festgehalten. Die Erwärmung wie auch die Endverformung werden in planen Ebenen durchgeführt.

## Beschreibung

Die Erfindung bezieht sich auf ein Verfahren zum taktweisen Thermoverformen von Kunststoffolie im Endlosband, insbesondere bei der Herstellung von Durchdrückpackungen für Arzneimittel, in dem die Kunststoffolie taktweise erwärmt und taktweise zwischen zwei Hälften eines Verformwerkzeugs unter Abstützung an der einen Hälfte mittels der anderen, Stempel aufweisenden Hälfte, positiv endverformt wird. Es wird gleichzeitig eine Vorrichtung zur Durchführung dieses Verfahrens aufgezeigt, mit einer Heizstation und einer Verformstation und einem in der Verformstation eingesetzten Verformwerkzeug, welches an seiner Hälfte Vertiefungen und seiner anderen Hälfte Stempel für die positive Endverformung aufweist. Die Erfindung läßt sich ganz allgemein beim Verpacken von Gegenständen einsetzen, wobei die Gegenstände in ihrer absoluten Größe durchaus unterschiedliche Dimensionen aufweisen können. Es geht jedoch immer um das Tiefziehen von Kunststoffolie, wobei die gebildeten Näpfe oder Höfe beispielsweise eine Größe zur Aufnahme je einer einzelnen Tablette aufweisen können, aber auch in Größenordnungen herstellbar sind, die etwa die Form eines Joghurtbechers besitzen.

Ein Verfahren und eine Vorrichtung der eingangs beschriebenen Art sind aus der EP 0 408 874 A2 bekannt. Dort wird einerseits eine kontinuierlich arbeitende Vorrichtung und andererseits eine diskontinuierlich, also taktweise, arbeitende Vorrichtung aufgezeigt, bei denen das Tiefziehen der Kunststoffolie in zwei Schritten erfolgt, nämlich durch eine Vorverformung und eine Endverformung. Die Vorverformung geschieht dabei durch Anwendung von Vakuum. Für die Endverformung werden Stempel eingesetzt, über die die Kunststoffolie als Positiv gezogen wird. Es findet eine Trommel Verwendung, die auf ihrem Umfang mit zwei Arten von Vertiefungen versehen ist. Die eine Art der Vertiefungen dient dem Anlegen des Unterdrucks und damit dem Festhalten der Kunststoffolie auf dem Umfang der Trommel. Die andere Art von Vertiefungen sind die Aussparungen, die mit den Stempeln zusammenarbeiten; auch diese Vertiefungen sind an den Unterdruck angeschlossen. Etwa über die Hälfte des Umfangs der Trommel erstreckt sich eine Heizung in Form einer Strahlungsquelle, so daß die Kunststoffolie nur auf der Trommel Kontakt hat. Eine ausgeprägte räumliche Trennung zwischen einer Heizstation und einer Verformstation ist hier nicht vorhanden, weil die Trommel die Kunststoffolie durch beide Stationen hindurchführt. Die Aufheizung der Kunststoffolie mit Hilfe der Strahlungsquelle geschieht auf relativ großem Weg und unter Einwirkung des Unterdrucks seitens der Trommel auf die Kunststoffolie, so daß die Vorverformung während der Aufheizung schrittweise erfolgt. Unmittelbar am Ende der Strahlungsguelle ist die Verformungsstation für die Endverformung vorgesehen, die im Fall der taktweise arbeitenden Vorrichtung aus einer radial zur Trommel bewegbaren Platte besteht, an der im Abstand nebeneinander mehrere Stempel oder Stempelreihen angeordnet sind. Bei der kontinuierlich arbeitenden Vorrichtung sind die Stempel auf dem Umfang einer Walze angeordnet, so daß sie kontinuierlich zur Einwirkung gebracht werden können. Beide Vorrichtungen weisen jedoch eine Reihe gravierender Nachteile auf:
Die Kunststoffolie muß örtlich unterschiedlich temperiert werden, d. h. die Bereiche, in denen die Näpfe oder Höfe tiefgezogen werden sollen, muß erwärmt werden, während die benachbarten Bereiche der Kunststoffolie möglichst wenig oder nicht erwärmt werden sollen. Da die Beheizung durch die Strahlungsquelle nur in der Fläche möglich ist, muß die Kunststoffolie auf der anderen Seite durch die anliegende Trommel gekühlt werden. Diese Art der Temperierung der Kunststoffolie ist besonders energievergeudend und damit unrationell. Zusätzlich erhöht es den Aufwand an der Trommel. Es müssen gesonderte Isolierungen um die Vertiefungen herum angeordnet werden, um die Bereiche gegeneinander abzugrenzen und zu verhindern, daß die Folie auch dort, wo der Tiefziehvorgang erfolgen soll, ebenfalls gekühlt wird. Die Vorverformung wird schrittweise auf einem relativ langen Weg unter Einwirkung von Vakuum erzielt, wobei die Folie auf dem Umfang der Trommel nur durch Unterdruck festgehalten ist. Diese Festhaltung erfolgt nicht unmittelbar im Anschluß an die Vertiefungen, sondern noch relativ weit von den Isolierungen entfernt, so daß bereits bei der Vorverformung ein Nachfließen von Kunststoffolie in die Vertiefungen hinein nicht verhindert werden kann. Hierdurch entstehen wiederum Dickenunterschiede und Probleme im Siegelbereich der Kunststoffolie, also unmittelbar um die Vertiefungen bzw. Näpfe herum. Weiterhin ist nachteilig, daß es bereits bei Anwendung von zwei Stempelreihen hintereinander nicht möglich ist, die Stempel beider Stempelreihen radial zu der Achse der Trommel zu bewegen. Die Stempelform ist durch diese Bewegung begrenzt und es ist nicht möglich, exakt rotationssymmetrische Näpfe herzustellen. Insbesondere der Boden jedes Napfes besitzt eine gewisse Schräglage, so daß die aufgenommene Tablette dann notwendigerweise ebenfalls schräg liegt. Da die Kunststoffolie auf dem Umfang der Trommel nur durch Unterdruck gehalten ist, ergeben sich auch bei der Endverformung Nachteile durch das Nachfließen von Kunststoffmaterial und entsprechende Wanddickenunterschiede im Siegelbereich. Die Trommel wird zwar im Bereich der Heizstation und der Verformstation eingesetzt und erfüllt damit die Aufgabe in beiden Stationen. Insgesamt jedoch sind die Werkzeuge vergleichsweise kompliziert aufgebaut. Die Heizung durch die Strahlungsquelle ist ortsfest am Umfang der Trommel in gewisser Entfernung angeordnet. Hierdurch besteht die Gefahr einer Wärmeüberlastung der Folie bei Stillstand der Maschine. Die lange Vorheizzeit und Vorheizstrecke auf dem Umfang der Trommel erfordert eine genaueste Temperatursteuerung sowie eine Abstimmung der Strahlungswärme auf die durch Kühlung der Trommel abgeführte Wärme. Zusätzlich muß auch das Vakuum bzw. der Unterdruck an der Trommel auf diese genannten Parameter genauestens ab- und eingestellt werden. Die bekannte taktweise arbeitende Vorrichtung ist in ihrer Leistung begrenzt. Auch das beherrschbare Format ist begrenzt, d. h. die Größe und die Entfernung der Stempel voneinander kann nicht beliebig gesteigert werden.

Aus der Zeitschrift "Neue Verpackung", 7/78, S. 1055 und 1056, ist es hinsichtlich der Verformung von PVC-Folie bekannt, die Endverformung durch ein Druckgefälle, sei es durch Druckluft, sei es durch Unterdruck, durchzuführen und eine Vorverformung auf mechanische Weise vorzuschalten. Eine solche Verformung ist besonders energieaufwendig, da die Endverformung nur im thermoelastischen Bereich stattfinden kann. Es ist zwar beim Verformen von Kunststoffolie auch bereits bekannt, nicht auf dem Umfang einer Trommel, sondern in planen Ebenen zu arbeiten und einer Verformstation eine Heizstation in gemeinsamer planer Ebene vorzuschalten. Dabei wird jedoch die Vorverformung mechanisch durchgeführt und die Endverformung durch ein Druckgefälle Die Anwendung des Unterdrucks in der Verformstation ist damit möglich. In der Heizstation wird kein Druckgefälle angewendet. Bei solchen bekannten Maschinen ist auch eine örtliche Erwärmung und Kühlung der Kunststoffolie nicht möglich. Die Vorformung durch Vakuum unter Heizeinwirkung, wie es die EP 0 408 874 A2 zeigt, würde zu einer Dreistationsmaschine führen. Dabei wären Schwierigkeiten im Transport von der zweiten in die dritte Station zu erwarten. Insbesondere können sich Abkühlprobleme nachteilig bemerkbar machen.

Die bekannten Verfahren und Vorrichtungen weisen den Nachteil auf, daß ihre Anwendbarkeit von der Art der Kunststoffolie in starkem Maß abhängt. So lassen sich beispielsweise PVC-Folien vergleichsweise gut verformen, während bei Polypropylenfolien infolge der notwendigerweise einwirkenden hohen Temperaturen und der damit eingesetzten erheblichen Energiemenge Schrumpfprobleme auftreten. Auch bei der Verarbeitung laminierter Folien ergeben sich Schwierigkeiten.

Der Erfindung liegt die Aufgabe zugrunde, ein Verfahren und eine Vorrichtung zum taktweisen Thermoverfahren von Kunststoffolie aufzuzeigen, mit denen Kunststoffolien unterschiedlicher Art verarbeitbar sind. Die mit der Schrumpfung von Kunststoffolien verbundenen Probleme sowie die darauf beruhenden Folgeprobleme sollen in ihren negativen Auswirkungen erheblich gemindert werden.

Erfindungsgemäß wird dies bei dem Verfahren der eingangs beschriebenen Art dadurch erreicht, daß die Kunststoffolie nur im Stillstand ihrer taktweisen Bewegung unter beidseitigem Kontakt mit Heizplatten ganzflächig erwärmt wird, daß die erwärmte Kunststoffolie vor ihrer positiven Endverformung durch die Stempel bereichsweise zwischen den beiden Hälften der Verformwerkzeuge mechanisch festgehalten wird, und daß sowohl die Erwärmung wie auch die Endverformung in planen Ebenen durchgeführt werden. Die ganzflächige Erwärmung der Kunststoffolie von beiden Seiten her unter flächigem Kontakt ist problemlos durchführbar und läßt sich auch relativ leicht steuerungstechnisch beherrschen. Da die Heizplatten von der Folie abgehoben werden müssen, wie es für die taktweise Bewegung erforderlich ist, wird insoweit eine kontinuierliche Wärmeeinwirkung auf die Kunststoffolie vermieden. Da von beiden Seiten erwärmt wird, muß hierdurch bereits erheblich weniger Energie in die Folie eingebracht werden als bei Erwärmung von der einen und gleichzeitig Kühlung von der anderen Seite. Durch den Kontakt in der Erwärmung wird die Kunststoffolie gleichzeitig stabilisiert, so daß sich Durchhängerscheinungen nicht auswirken können.

Wichtig ist weiterhin, daß die Kunststoffolie auch während der nachfolgenden Verformung mechanisch festgehalten, also eingeklemmt wird. Das mechanische Einklemmen gestattet es, die Folie genauer, z. B. im Siegelbereich, festzuhalten und ein Nachfließen von Kunststoffmaterial zu verhindern. Es werden also gezielt nur die Bereiche verformt, die ohnehin für die Verformung vorgesehen sind. Andererseits können die Bereiche, die nicht der Verformung unterzogen werden sollen, wirkungsvoll gekühlt werden, so daß insgesamt die Schrumpfung im Formatbereich herabgesetzt wird. Es besteht eine gute Kühlmöglichkeit der Hälften des Verformwerkzeugs, da diese Bestandteile des Verformwerkzeugs bei der Erwärmung der Kunststoffolie nicht zum Einsatz kommen. Hierdurch ergibt sich bereits eine erste Energieeinsparung. Eine zweite Energieeinsparung wird dadurch möglich, daß die Endverformung in positiver Weise durch die beheizbaren Stempel durchgeführt wird. Die Verformung kann insoweit auch auf solche Bereiche ausgedehnt werden, die sich nicht unbedingt gänzlich im thermoelastischen Zustand befinden. Dies bedeutet, daß die Erwärmung der Kunststoffolie in der Heizstation und die dabei erreichte Verformungstemperatur der Kunststoffolie gegenüber dem Stand der Technik beträchtlich abgesenkt werden kann. Es ist eine Eintaktheizung möglich, die im Gegensatz zum Stand der Technik auf eine relativ kurze Strecke beschränkt ist. Unter Anwendung niedrigerer Verformungstemperaturen von beispielsweise etwa 100°C im Vergleich zu etwa 140°C beim Stand der Technik wird insgesamt weniger Energie in die Kunststoffolie eingebracht, so daß auch hierdurch der Schrumpfung und den darauf basierenden Problemen entgegengewirkt wird. Überraschenderweise zeigt das neue Verfahren keine nennenswerte Abhängigkeit von der Art des Kunststoffs, was zum Teil auch daran liegt, daß die Endverformung positiv mechanisch durchgeführt wird. Es lassen sich problemlos rotationssymmetrische Näpfe bzw. Höfe herstellen, da in planen Ebenen gearbeitet wird und das Eintauchen bzw. Herausziehen der Stempel aus den Näpfen bzw. relativ in den Vertiefungen in einer Richtung senkrecht zur Laufrichtung der Kunststoffolie erfolgt. Auch eine Begrenzung in der Formatgröße ist grundsätzlich nicht gegeben, was sich im Sinn einer Leistungssteigerung positiv auswirkt. Auch die Verformfläche insgesamt ist nicht begrenzt, so daß z. B. auch relativ große Näpfe, wie insbesondere Joghurtbecher, so herstellbar sind.

Das vorliegende Verfahren kann allein mit Hilfe einer Endverformung arbeiten. Diese Endverformung stellt dann den alleinigen Verformungsvorgang dar. Es ist aber auch möglich, nach dem mechanischen Festhalten der erwärmten Kunststoffolie eine Vorverformung durch Anwendung eines Druckgefälles vorzusehen. Dieses Druckgefälle kann durch Verwendung von Druckluft für insbesondere große Druckgefälle oder durch Verwendung von Unterdruck bei vergleichsweise kleinem Druckgefälle realisiert werden. In beiden Fällen ist dies günstig für eine gleichmäßige Wanddickenverteilung. Durch das Einklemmen der Folie kann weder während der Vorverformung noch während der Endverformung ein Nachfließen von Folienmaterial z. B. aus dem Siegelbereich heraus erfolgen. Es ergeben sich dann bei der Weiterverarbeitung der Folie keine Siegelprobleme.

Die Vorrichtung zur Durchführung des Verfahrens kennzeichnet sich erfindungsgemäß dadurch, daß die Heizstation für den ganzflächigen Kontakt zu der Kunststoffolie aufweist, von denen zumindest eine taktweise senkrecht zur Haupterstreckungsebene der Kunststoffolie angetrieben ist, daß die beiden Hälften des Verformwerkzeugs nur in der Verformstation angeordnet sind und mit der Kunststoffolie in Kontakt kommen, und daß das Verformwerkzeug mindestens ein drittes Teil zum taktweisen Festhalten der erwärmten Kunststoffolie in der Verformstation aufweist. Heizstation und Verformstation sind sauber voneinander getrennt und weisen keine gemeinsamen Bestandteile auf. Durch die Heizplatte wird die Kunststoffolie von beiden Seiten her ganzflächig erwärmt und zugleich durch den körperlichen Kontakt mechanisch abgestützt. Andererseits erfolgt die Einbringung von Heizwärme nur während der Aufheizung, also insbesondere nicht während einer Vorverformung. Durch die Bewegbarkeit der Heizplatten ist die Möglichkeit geschaffen, eine Wärmeüberlastung bei Stillstandszeiten der Maschine zu vermeiden. Weiterhin sind die Einzelteile der Verformungsstation nur in der Verformungsstation wirksam und können daher optimal temperaturmäßig beaufschlagt werden. Die Stempel oder eine gemeinsame Stempelhalteplatte können beheizt werden, so daß die positive Endverformung leichter durchführbar wird. Die die Klemmung der Kunststoffolie bewirkenden Teile können wirksam gekühlt werden und bewirken insoweit eine Stabilisierung der Kunststoffolie. So sind zweckmäßig die die Vertiefungen aufweisende Hälfte und das dritte Teil des Verformwerkzeugs an einen Kühlkreislauf und die die Stempel tragende Hälfte des Verformwerkzeugs an eine Wärmequelle angeschlossen. Es bietet sich hier eine elektrische Beheizung der Stempel an. Da die Stempel von den beiden Hälften des Verformwerkzeugs getrennt, also nicht körperlich mit diesen verbunden sind, wird auch eine Wärmeübertragung durch Wärmeleitung an dieser Stelle vermieden.

Das dritte Teil zum Einklemmen der Kunststoffolie kann unmittelbar im Anschluß an die zu verformenden Bereiche der Kunststoffolie ausgebildet sein. Der sich an den Napf anschließende Siegelbereich liegt damit in der gekühlten Zone und irgendwelche Abstände, wie sie durch die Anordnung von Isolierungen im Stand der Technik erforderlich sind, können sich nicht nachteilig auswirken.

Die Heizplatten und das Verformwerkzeug sind zweckmäßig in planen Ebenen auf die Kunststoffolie einwirkend vorgesehen, wobei die Einwirkung durchaus auch in einer gemeinssmen planen Ebene stattfinden kann.

Das erfindungsgemäße Verfahren und die Vorrichtung werden anhand der Zeichnungen weiter erläutert und beschrieben. Es zeigen:
- Figur 1: eine Folge von Prinzipdarstellungen zur Verdeutlichung aufeinanderfolgender Verfahrensschritte und
- Figur 2: ein Ausführungsbeispiel der Vorrichtung in Seitenansicht, teilweise geschnitten.

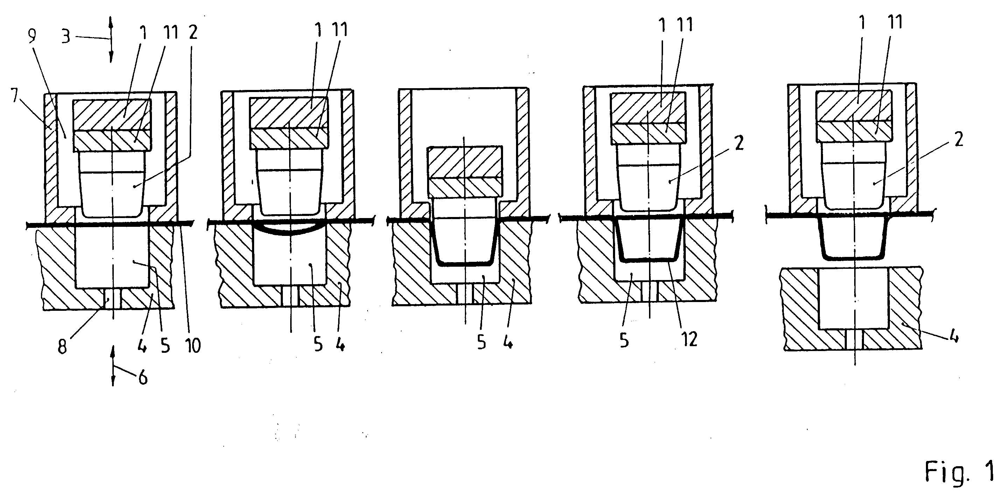

In Figur 1 sind lediglich Schnittdarstellungen der Verformstation in der jeweiligen Relativlage der Teile zueinander dargestellt. Das Verformwerkzeug weist eine obere Hälfte 1 auf, an der Stempel 2 sitzen. Die obere Hälfte 1 ist mit einem Vertikalantrieb gemäß Pfeil 3 ausgestattet. Das Verformwerkzeug weist eine untere Hälfte 4 auf, in der entsprechend der Rasteranordnung der Stempel 2 Vertiefungen 5 vorgesehen sind. Die untere Hälfte 4 besitzt ebenfalls einen vertikalen Antrieb gemäß Pfeil 6. Zu dem Verformwerkzeug gehört noch ein drittes Teil 7, welches über keinen Antrieb verfügt, also stillstehend am Maschinenrahmen gelagert ist. Eine Leitung 8 kann die Vertiefungen 5 zusammenfassen und an eine Unterdruckquelle anschließen. Stattdessen könnte auch der Zwischenraum 9 zwischen dem Teil 7 und den Stempeln 2 an eine Druckquelle anschließbar sein, wenn ein größeres Druckgefälle zu Vorformzwecken angewendet werden soll. Zwischen den Teilen 1, 4, 7 befindet sich die erwärmte, tiefzuziehende Kunststoffolie 10.

Das erste Bild der Folge in Figur 1 zeigt die Relativlage der Teile, unmittelbar nachdem die Kunststoffolie 10, die vorher in einer Heizstation erwärmt wurde, in der Verformstation eingelaufen und dort stillgesetzt ist. Da der Teil 7 stillsteht, wird die untere Hälfte 4 gemäß Pfeil 6 nach aufwärts bewegt, bis die Kunststoffolie 10 zwischen den Teilen 4 und 7 eingeklemmt ist. Die Einklemmung reicht bis unmittelbar an den Rand der Vertiefungen 5. Die Teile 4 und 7 sind zweckmäßig an einen Kühlkreislauf angeschlossen, so daß sich hier durch das Aufsetzen und den Kontakt mit den Teilen 4 und 7 eine Abkühlwirkung auf die Kunststoffolie 10 in dem ergriffenen Bereich ergibt, die eine Verfestigung des vorher ganzflächig erwärmten Materials nach sich zieht. Diese Verfestigung wirkt einem Nachfließen von Kunststoff in Richtung der Vertiefungen 5 entgegen und stellt damit sicher, daß keine Wanddickenveränderung im Siegelbereich stattfindet.

In dieser Stellung wird z. B. die Unterdruckquelle an die Leitung 8 angeschlossen. Dies geschieht zu Vorformzwecken, so daß die erwärmte Kunststoffolie 10, freihängend über den Vertiefungen 5 und abgestützt zwischen den Teilen 4 und 7, einen nach unten gerichteten Verformungsvorgang ausführt, wie es in der Endstellung der zweiten Schnittdarstellung in Figur 1 dargestellt ist. Diese Vorformung bewirkt eine gleichmäßige Wanddickenverteilung im Bereich des tiefzuziehenden Materials. Es ist auch möglich, auf diese Vorformung zu verzichten, wobei dann an die erste Darstellung unmittelbar die dritte Darstellung anschließen würde.

Die obere Hälfte 1, die entweder an einer Stempelhalteplatte 11 oder direkt an den Stempeln 2 beheizbar ist, wird nun, d. h. in der geklemmten Stellung der Kunststoffolie 10 mit ihrem Antrieb gemäß Pfeil 3 abwärts bewegt, wobei die dritte Darstellung in Figur 1 diesen Endzustand zeigt. Es ist wichtig, zu erkennen, daß hier eine positive Endverformung vorliegt, weil die Kunststoffolie 10 über die Stempel 2 als positiv hinübergezogen wird. Es findet kein Kontakt der Kunststoffolie 10 mit den Wandungen der Vertiefung 5 statt. Diese positive Endverformung stellt eine mechanische Verformung - im Gegensatz zu einer Verformung mittels Druckluft oder Vakuum - dar. Eine solche mechanische Verformung ist nicht unbedingt nur auf den thermoelastischen Bereich der Kunststoffolie angewiesen, sondern durch die bei der mechanischen Verformung aufzubringende Kraft ist es auch möglich, auch niedriger temperierte Bereiche der Kunststoffolie 10 zu verformen. Daher ergibt sich die Möglichkeit, die Kunststoffolie 10 in der vorangehenden Heizstation niedriger aufzuheizen, also insgesamt sehr viel weniger Energie in die Kunststoffolie hineinzustecken, so daß sich Schrumpfprobleme schon aus dieser Sicht in weit geringerem Maß nachteilig auswirken können. Während bisher die Kunststoffolie 10 im Stand der Technik auf etwa 140° erwärmt werden mußte, genügt jetzt eine Verformungstemperatur der Kunststoffolie 10 von annähernd 100°C.

Die vierte Darstellung in Figur 1 zeigt die Relativlage der Teile, nachdem die obere Hälfte 1 mit den Stempeln 2 gemäß Pfeil 3 nach oben abgehoben und hinter den dritten Teil 7 zurückgezogen wurde. Auch zu diesem Zeitpunkt ist die Kunststoffolie 10 noch zwischen den Teilen 4 und 7 eingeklemmt, so daß die tiefgezogenen Näpfe 12 stabilisierend gehalten sind. Im letzten Schritt wird dann die untere Hälfte 4 gemäß Pfeil 6 nach unten abgesenkt, so daß die Klemmung der Kunststoffolie 10 aufgehoben wird und die Näpfe 12 freikommen, so daß die getaktete Bewegung der Kunststoffolie 10 einsetzen kann.

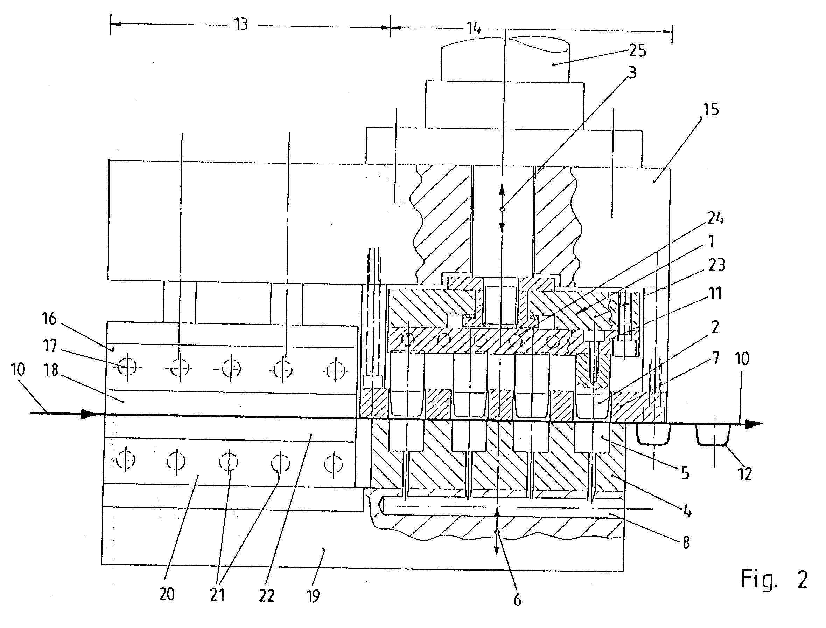

Figur 2 zeigt eine konstruktive Ausführung einer Baueinheit aus einer Heizstation 13 und einer Verformstation 14. Die Folie 10 wird getaktet durch die Heizstation 13 und die Verformstation 14 geführt, wobei jeweils ein in der Heizstation 13 ganzflächig erwärmtes Teil der Kunststoffolie 10 im nächsten Takt unmittelbar in die Verformstation 14 gelangt. An einem gemeinsamen Rahmen 15, der feststehend an der Maschine vorgesehen ist, ist nicht nur das dritte Teil 7 der Verformungsstation 14, sondern auch eine obere Heizplatte 16 im Bereich der Heizstation 13 befestigt. Der Rahmen 15 ist zu Inspektionszwecken und für Stillstandszeiten der Maschine nach oben aufklappbar. In der oberen Heizplatte 16 sind Heizpatronen 17 für die Erwärmung angeordnet, die Bestandteil eines elektrischen Steuerkreises sind. Unter die Heizplatte 16 ist eine Formatplatte 18 geschraubt, die auswechselbar und damit jeweils auf verschiedene Formate abstimmbar ist. Unterhalb der Kunststoffolie 10 ist die untere Hälfte 4 des Verformungswerkzeugs vorgesehen, die sich, etwa mit Hilfe einer besonderen Verbindungsplatte 19, auch bis in den Bereich der Heizstation 13 erstreckt. Auf der Verbindungsplatte 19 sind hier wiederum eine Heizplatte 20 mit Heizpatronen 21 sowie die andere Formatplatte 22 angeordnet. Auch die Heizpatronen 21 sind in einem weiteren Steuerkreis vorgesehen, der aus Übersichtlichkeitsgründen icht dargestellt ist. Der mechanische Antrieb gemäß Pfeil 6 greift an der Verbindungsplatte 19 an und gestattet eine vertikale Bewegung sowohl der Hälfte 4 des Verformungswerkzeugs als auch der unteren Formatplatte 22. Es ist damit erkennbar, daß zur gleichen Zeit, wenn die Kunststoffolie 10 in der Verformungsstation 14 eingeklemmt wird, das dem nachfolgenden Takt zugeordnete Stück der Kunststoffolie 10 in der Heizstation 13 mit den Formatplatten 18 und 22 in Kontakt kommt und insoweit ganzflächig aufgeheizt wird.

Die obere Hälfte 1 des Verformungswerkzeugs im Bereich der Verformungsstation 14 weist im Einzelnen eine Trageplatte 23, eine Stempelhalteplatte 11 und an dieser sitzend das Feld von Stempeln 2 auf. In der Stempelhalteplatte 11 sind Heizpatronen 24 untergebracht, die Bestandteil eines separaten elektrischen Regelkreises für die Erwärmung der Stempel 2 sind. Die obere Hälfte 1 ist, wie dargestellt, gemäß Pfeil 3 vertikal bewegbar. Hierzu dient ein neu angedeuteter Pneumatikzylinder 25.

Die taktweise in der Heizstation 13 erwärmte Kunststoffolie 10 wird in der Verformungsstation 14 genauso vorverformt und endverformt, wie dies anhand der Verfahrensschritte in Figur 1 beschrieben wurde. Während dieser Verformung wird ein weiteres Format in der Heizstation 13 erwärmt. Es ist erkennbar, daß die Heizstation 13 und die Verformungsstation 14 gleiche Arbeitslänge besitzen, d. h. es wird nur in einem Takt erwärmt und nur in einem Takt verformt. Bei Unterbrechung der Arbeitsweise der Thermoformmaschine wird die Verbindungsplatte 19 gemäß Pfeil 6 abgesenkt und der Rahmen 15 nach oben aufgeklappt, so daß die Kunststoffolie 10 vor einer Wärmeüberlastung geschützt ist.

### Bezugszeichenliste:

- 1: = obere Hälfte
- 2: = Stempel
- 3: = Pfeil
- 4: = untere Hälfte
- 5: = Vertiefungen
- 6: = Pfeil
- 7: = Teil
- 8: = Leitung
- 9: = Zwischenraum
- 10: = Kunststoffolie
- 11: = Stempelhalteplatte
- 12: = Napf
- 13: = Heizstation
- 14: = Verformungsstation
- 15: = Rahmen
- 16: = Heizplatte
- 17: = Heizpatrone
- 18: = Formatplatte
- 19: = Verbindungsplatte
- 20: = Heizplatte
- 21: = Heizpatrone
- 22: = Formatplatte
- 23: = Trageplatte
- 24: = Heizptrone
- 25: = Pneumatikzylinder

## Patentansprüche

1. Verfahren zum taktweisen Thermoverformen von Kunststoffolie im Endlosband, insbesondere bei der Herstellung von Durchdrückpackungen für Arzneimittel, in dem die Kunststoffolie taktweise im Stillstand unter beidseitigem Kontakt ganzflächig erwärmt und taktweise zwischen Hälften eines Verformwerkzeuges vorverformt und endverformt wird, wobei sowohl die Erwärmung als auch die Vor- und Endverformung in planen Ebenen durchgeführt und die Kunststoffolie bereichsweise zwischen den beiden Hälften des Verformwerkzeuges mechanisch festgehalten wird, dadurch gekennzeichnet, daß die Vorverformung allein mittels Vakuum und die Endverformung unter Einsatz von Stempeln in mechanischer Weise erfolgen.

2. Verfahren nach Anspruch 1, dadurch gekennzeichnet, daß die Vorverformung und die Endverformung unter durchgehendem mechanischen Festhalten der Kunststoffolie unmittelbar nacheinander in dem Verformwerkzeug erfolgen.

3. Verfahren nach Anspruch 1 oder 2, dadurch gekennzeichnet, daß die Vor- und Endverformung in einem Takt durchgeführt wird.

4. Vorrichtung zur Durchführung des Verfahrens nach einem der Ansprüche 1 bis 3, mit einer zwei ebene Heizplatten für den ganzflächigen Kontakt zu der Kunststoffolie aufweisenden Heizstation und einem in der Verformstation eingesetzten Verformwerkzeug, welches an seiner einen Hälfte Vertiefungen und an seiner anderen Hälfte Stempel aufweist, die taktweise senkrecht zur Haupterstreckungsebene der Kunststoffolie angetrieben sind, wobei die Kunststoffolie über die Hälften des Verformwerkzeuges taktweise festgehalten wird und die Vertiefungen einen Anschluß für Vakuum aufweisen, dadurch gekennzeichnet, daß für die Vorverformung und die Endverformung eine einzige Verformstation vorgesehen ist, in der für die Vorverformung das Vakuum angeschlossen wird und für die anschließende Endverformung die Stempel angetrieben werden.

5. Vorrichtung nach Anspruch 4, dadurch gekennzeichnet, daß die die Vertiefungen (5) aufweisende Hälfte (4) und das andere Teil (7) des Verformwerkzeuges an einen Kühlkreislauf und die die Stempel (2) tragende Hälfte (1) des Verformwerkzeuges an eine Wärmequelle angeschlossen sind.

6. Vorrichtung nach Anspruch 4 und 5, dadurch gekennzeichnet, daß das andere Teil (7) zum Einklemmen der Kunststoffolie (10) unmittelbar im Anschluß an die zu verformenden Bereiche der Kunststoffolie ausgebildet ist.
